# EUROPEAN PATENT APPLICATION

(11) **EP 2 892 220 A1**
(43) Date of publication of application: **08.07.2015**
(21) Application number: 13845777.5
(22) Date of filing: 14.08.2013
(51) Int. Cl.: H04M 3/533

(54) **VOICE MAIL SERVER, TERMINAL AND VOICE MESSAGE PROCESSING METHOD**

(30) Priority: 08.10.2012 CN 201210377378
(71) Applicant: ZTE Corporation, Guangdong Province 518057 (CN)
(72) Inventor: WEI, Xiaodong, Shenzhen Guangdong 518057 (CN); LAI, Tianjian, Shenzhen Guangdong 518057 (CN); LI, Gang, Shenzhen Guangdong 518057 (CN)
(74) Representative: Zerbi, Guido Maria
(86) International application number: PCT/CN2013/081447
(87) International publication number: WO 2014/056349

(57) **Abstract**

A voice mailbox server, a terminal and a voice message processing method are disclosed. The terminal includes: a second receiving module, configured to: receive a first message menu sent by a voice mailbox server; a third acquisition module, configured to: acquire a voice message selected to process by a user in the first message menu; an instruction generation module, configured to: generate a voice message processing instruction according to the selected voice message; and a second sending module, configured to: send the voice message processing instruction to the voice mailbox server, so that the voice mailbox server can determine a selected voice message according to the message processing instruction and perform processing on the selected voice message. By the embodiments of the present document, users of a voice mailbox are enabled to conveniently and efficiently perform operation processing on specified message information.

## Description

### Technical Field

The present document relates to the field of communication, and particularly, to a voice mailbox server, a terminal and a voice message processing method.

### Background of the Related Art

At present, the voice mailbox system is widely applied, the system has many users, and its market potential is huge. The voice mailbox system is a new communication terminal that provides storage and extraction of voice information for users with a technique of a computer in the telephone network storing and processing information. With a voice mailbox, people's voice information can be transmitted to a recipient's mailbox like letters, and such transmission way is more convenient and efficient than the letters. Since the voice has features such as good privacy and no limitation of time and place and so on, it is used by more and more people.

However, there is a plurality of disadvantages in listening to messages through the voice mailbox now. Firstly, the user is required to remember a host flow access code of the voice mailbox system; secondly, a corresponding message cannot be directly listened to when listening to messages, and it is required to listen one by one according to a message time; thirdly, an operation of listening to the messages is comparatively tedious.

### Summary of the Invention

The object of the embodiments of the present document is to provide a voice mailbox server, a terminal and a voice message processing method, so that a voice mailbox user can perform operation processing on specified message information conveniently and efficiently.

In order to achieve the above object, the embodiment of the present document provides a voice mailbox server, which comprises:
a voice message recording module, configured to: when recording a voice message of a calling terminal, generate first voice message information according to the voice message, wherein the first voice message information comprises: a called terminal identifier;
a first acquisition module, configured to: acquire all voice message information corresponding to the called terminal identifier, and form a first message menu;
a first sending module, configured to: send the first message menu to a called terminal corresponding to the called terminal identifier;
a first receiving module, configured to: receive a voice message processing instruction fed back by the called terminal, wherein the voice message processing instruction is generated by the called terminal according to and after a voice message is selected to process by a user from the first message menu; and
a processing module, configured to: according to the voice message processing instruction, perform processing on a selected voice message.

Meanwhile, preferably, the processing module specifically comprises:
a second acquisition module, configured to: according to the voice message processing instruction, determine a first voice message identifier corresponding to the selected voice message;
a determination module, configured to: according to the first voice message identifier and a preset corresponding relationship between voice message identifiers and voice messages, determine a first voice message corresponding to the first voice message identifier; and
a processing submodule, configured to: according to the message processing instruction, perform processing on the first voice message.

Meanwhile, preferably, the processing submodule is configured to: according to the message processing instruction, perform processing of playing, forwarding, saving or deleting on the first voice message.

In order to achieve the above object, the embodiment of the present document further provides a terminal, which comprises:
a second receiving module, configured to: receive a first message menu sent by a voice mailbox server;
a third acquisition module, configured to: acquire a voice message selected to process by a user in the first message menu;
an instruction generation module, configured to: generate a voice message processing instruction according to the selected voice message; and
a second sending module, configured to: send the voice message processing instruction to the voice mailbox server, so that the voice mailbox server can determine a selected voice message according to the message processing instruction and perform processing on the selected voice message.

Meanwhile, preferably, the third acquisition module is configured to acquire a voice message selected to process by the user in the first message menu through a pointer of a virtual management menu.

Meanwhile, preferably, the terminal further comprises:
a second storage module, configured to: store a message menu received by the terminal; and
an update module, configured to: update the message menu in the second storage module to the first message menu received by the second receiving module last time.

In order to achieve the above object, the embodiment of the present document further provides a voice message processing method, which is applied to a voice mailbox server, and comprises:
when recording a voice message of a calling terminal, generating first voice message information according to the voice message, wherein the first voice message information comprises a called terminal identifier;
acquiring all voice message information corresponding to the called terminal identifier, and forming a first message menu;
sending the first message menu to a called terminal corresponding to the called terminal identifier;
receiving a voice message processing instruction fed back by the called terminal, wherein the voice message processing instruction is generated by the called terminal according to and after a voice message is selected to process from the first message menu by a user; and
performing processing on the selected voice message according to the voice message processing instruction.

Meanwhile, preferably, performing processing on the selected voice message according to the voice message processing instruction specifically comprises:
determining a first voice message identifier corresponding to the selected voice message according to the voice message processing instruction;
determining a first voice message corresponding to the first voice message identifier according to the first voice message identifier and a preset corresponding relationship between voice message identifiers and voice messages; and
performing processing on the first voice message according to the message processing instruction.

Meanwhile, preferably, performing processing on the first voice message according to the message processing instruction is specifically: performing processing of playing, forwarding, saving or deleting on the first voice message according to the message processing instruction.

In order to achieve the above object, the embodiment of the present document further provides a voice message processing method, which is applied to a terminal, and comprises:
receiving a first message menu sent by a voice mailbox server;
acquiring a voice message selected to process by a user in the first message menu;
generating a voice message processing instruction according to the selected voice message; and
sending the voice message processing instruction to the voice mailbox server, so that the voice mailbox server can determine a selected voice message according to the message processing instruction and perform processing on the selected voice message.

Meanwhile, preferably, acquiring a voice message selected to process by the user in the first message menu is specifically acquiring a voice message selected to process by the user in the first message menu through a pointer of a virtual management menu.

Meanwhile, preferably, the method further comprises:
storing a message menu received by the terminal; and
updating the stored message menu to the first message menu received last time.

The embodiments of the present document provide a voice mailbox server, a terminal and a voice message processing method, wherein when the voice mailbox server records a voice message of a calling user, the voice mailbox server will acquire all voice message information of a called terminal according to an identifier of the called terminal in the generated first voice message information, form a first message menu, and send the first message menu to the called terminal; after receiving the first message menu, the called terminal will acquire information of a voice message selected by a user to undergo operation processing in the first message menu, and generate a message processing instruction to return to the voice mailbox server, the voice mailbox server determines the voice message required to be processed according to the received message processing instruction, and executes operation processing to perform operations such as playing, forwarding, saving and deleting on the voice message according to user needs.

The embodiments of the present document have the following beneficial effects.

The flow for the user to listen to the message and operate is greatly simplified through the above process, so that users of the voice mailbox perform operation processing on the specified message information conveniently and efficiently, which improves the users' satisfaction and is very beneficial for service promotion;
all the operations on the voice message are not required to locally download the voice message, and all the operations can be directly performed in the voice mailbox server through the message processing instruction, which saves terminal resources; and
a voice message menu can be sent to the terminal through a USSD protocol in the embodiments of the present documents, and the terminal can execute operations related to the voice message conveniently and efficiently with no need of installing a client software, which also saves the terminal resources.

### Brief Description of Drawings

FIG. 1 is a schematic diagram of a structure of a voice mailbox server in the embodiment of the present document.
FIG. 2 is a schematic diagram of a structure of a terminal in the embodiment of the present document.
FIG. 3 is a flow chart of a voice message processing method used for a voice mailbox server in the embodiment of the present document.
FIG. 4 is a flow chart of a voice message processing method used for a terminal in the embodiment of the present document.

### Preferred Embodiments of the Invention

Detailed descriptions will be made in combination with the accompanying drawings and specific embodiments below.

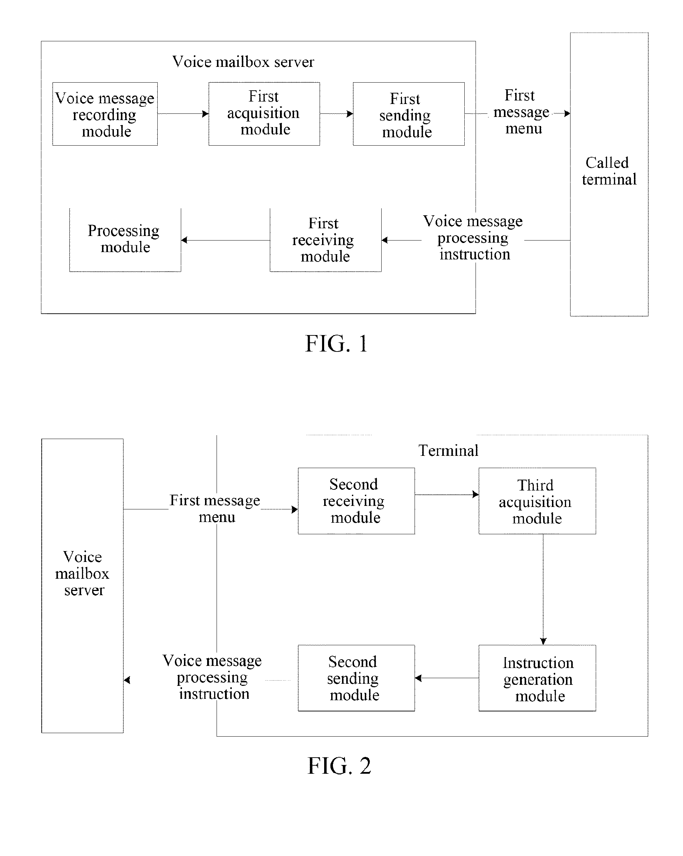

The embodiment of the present document provides a voice mailbox server as shown in FIG. 1, which includes:
a voice message recording module, configured to: when recording a voice message of a calling terminal, generate first voice message information according to the voice message, wherein the first voice message information comprises: a called terminal identifier;
a first acquisition module, configured to: acquire all voice message information corresponding to the called terminal identifier, and form a first message menu;
a first sending module, configured to: send the first message menu to a called terminal corresponding to the called terminal identifier;
a first receiving module, configured to: receive a voice message processing instruction fed back by the called terminal, wherein the voice message processing instruction is generated by the called terminal according to and after a voice message is selected to process by a user from the first message menu; and
a processing module, configured to: according to the voice message processing instruction, perform processing on the selected voice message.

When recording a voice message of a calling user, the voice message recording module of the voice mailbox server will generate data information related to the message, namely the first voice message information, wherein a message identifier, a voice number, a message time, a recording duration and a called terminal identifier are included.

The first acquisition module acquires all voice message information corresponding to the called terminal according to the called terminal identifier, and forms a first message menu.

The first sending module can send the first message menu to the called terminal through a communication protocol such as a USSD protocol between the server and the terminal.

The first receiving module is configured to receive a voice message processing instruction fed back by the called terminal, where the voice message processing instruction is generated by the called terminal according to and after a voice message is selected to process from the first message menu by a user.

The processing module specifically determines a voice message selected by the user according to the voice message processing instruction returned by the called terminal, and performs operation processing on the voice message, the operation processing includes playing, forwarding, saving or deleting the voice message.

Wherein, preferably, the processing module of the voice mailbox server specifically includes:
a second acquisition module, configured to: determine a first voice message identifier corresponding to the selected voice message according to the voice message processing instruction;
a determination module, configured to: determine a first voice message corresponding to the first voice message identifier according to the first voice message identifier and a preset corresponding relationship between a voice message identifier and a voice message; and
a processing submodule, configured to: perform processing on the first voice message according to the message processing instruction.

The called terminal user will return a voice message processing instruction, and the instruction includes an identifier of a voice message selected by the user to undergo operation processing, where the identifier of the voice message can be an ID number of the voice message or other identifier information that can uniquely determine a voice message. The second acquisition module will acquire the first voice message identifier, and the first voice message corresponding to the first voice message identifier is determined according to the first voice message identifier and a preset corresponding relationship between voice message identifiers and voice messages. The processing submodule will perform operation processing on the determined first voice message according to the voice message processing instruction.

Through the above process, the voice message selected by the called terminal user to undergo operation processing can be directly determined according to the voice message processing instruction returned by the called terminal, and processing can be directly performed on the voice message according to the message processing instruction, thus it is not required to locally download the voice message and then perform relevant operations, which saves terminal resources and simplifies an operation flow of the user listening to messages; meanwhile, the message menu is sent to the terminal through an Unstructured Supplementary Service Data (USSD) protocol, thus the users of the terminal can execute operations related to the voice message conveniently and efficiently without installing a client software, which also saves the terminal resources.

Wherein, preferably, the processing submodule is configured to: perform processing of playing, forwarding, saving or deleting on the first voice message according to the message processing instruction.

The embodiment of the present document also provides a terminal as shown in FIG. 2, which includes:
a second receiving module, configured to: receive a first message menu sent by a voice mailbox server;
a third acquisition module, configured to: acquire a voice message selected to process by a user in the first message menu;
an instruction generation module, configured to: generate a voice message processing instruction according to the selected voice message; and
a second sending module, configured to: send the voice message processing instruction to the voice mailbox server, so that the voice mailbox server can determine a selected voice message according to the message processing instruction and perform processing on the selected voice message.

The second receiving module of the terminal receives a first message menu sent by a voice mailbox server, the third acquisition module will acquire a voice message required to be processed immediately and selected by the user of the terminal in the first message menu, the instruction generation module mainly generates a message processing instruction according to the voice message, the message processing instruction includes an identifier of the voice message selected by the user, and the second sending module sends the message processing instruction back to the voice mailbox server.

In the above process, the user is not required to remember a host flow access code of the voice mailbox, if it is needed to listen to a message, it is also not required to listen one by one according to a message time, but only required to select the voice message information on which next operation processing is required to be performed in the received message menu, and then the selected voice message can be directly listened to, so that the user uses a message function of the voice mailbox service more conveniently and efficiently.

Wherein, preferably, the third acquisition module is configured to acquire a voice message selected to process by the user in the first message menu through a pointer of a virtual management menu.

Wherein, preferably, the terminal also includes:
a second storage module, configured to: store a message menu received by the terminal; and
an update module, configured to: update the message menu in the second storage module to the first message menu last time received by the second receiving module.

After the terminal receives the first message menu, the previously stored message menu is not needed any more, and it can be updated to the first message menu.

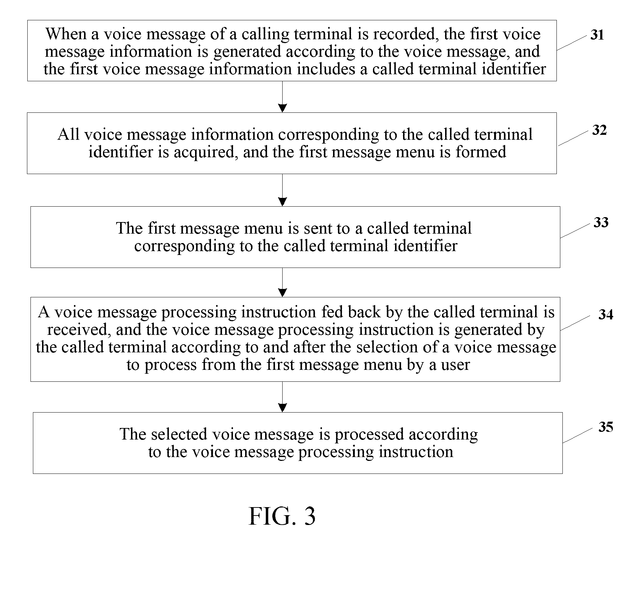

The embodiment of the present document also provides a voice message processing method applied to a voice mailbox server, and as shown in FIG. 3, the following steps are included.

In step 31, when a voice message of a calling terminal is recorded, the first voice message information is generated according to the voice message, and the first voice message information includes a called terminal identifier.

In step 32, all voice message information corresponding to the called terminal identifier is acquired, and a first message menu is formed.

In step 33, the first message menu is sent to a called terminal corresponding to the called terminal identifier.

In step 34, a voice message processing instruction fed back by the called terminal is received, and the voice message processing instruction is generated by the called terminal according to and after a voice message in the first message menu is selected to process by a user.

In step 35, processing on the selected voice message is performed according to the voice message processing instruction.

In the method, when a voice message of a calling user is recorded, data information related to the message namely the first voice message information will be generated, wherein a message identifier, a voice number, a message time, a recording duration and a called terminal identifier are included. All voice message information corresponding to the called terminal is acquired according to the called terminal identifier, and a first message menu is formed. The first message menu is sent to the called terminal through a communication protocol such as a USSD protocol between the server and the terminal. A voice message processing instruction returned by the called terminal after receiving the first message menu and acquiring information of a voice message selected to process by the user in the first message menu is received. A voice message selected by the user is eventually determined according to the returned voice message processing instruction, and operation processing is performed on the voice message, where the operation processing includes operations such as playing, forwarding, saving or deleting the voice message.

Wherein, preferably, the step 35 of the above method can specifically include the following steps.

In step 351, a first voice message identifier corresponding to the selected voice message is determined according to the voice message processing instruction.

In step 352, a first voice message corresponding to the first voice message identifier is determined according to the first voice message identifier and a preset corresponding relationship between voice message identifiers and voice messages.

In step 353, processing on the first voice message is performed according to the message processing instruction.

The called terminal user will return a voice message processing instruction, the instruction includes an identifier of a voice message selected by the user to undergo operation processing, where the first voice message identifier can be an ID number of the voice message or other identifier information that can uniquely determine a voice message. The first voice message identifier is acquired with the method, a first voice message corresponding to the first voice message identifier is determined according to a preset corresponding relationship between voice messages and voice message identifiers, and operation processing is performed on the first voice message according to the message processing instruction.

Wherein, preferably, performing processing on the first voice message according to the message processing instruction is specifically: according to the message processing instruction, performing processing of playing, forwarding, saving or deleting on the first voice message.

In the above process, the voice message selected by the called terminal user to undergo operation processing can be determined according to the message processing instruction returned by the called terminal, and processing can be directly performed on the voice message according to the message processing instruction, thus it is not required to locally download the voice message and then perform relevant operations, which saves terminal resources and simplifies an operation flow of the user listening to messages. Meanwhile, the message menu is sent to the terminal through an Unstructured Supplementary Service Data (USSD) protocol, thus the users of the terminal can execute operations related to the voice message conveniently and efficiently with no need of installing client software, which also saves the terminal resources.

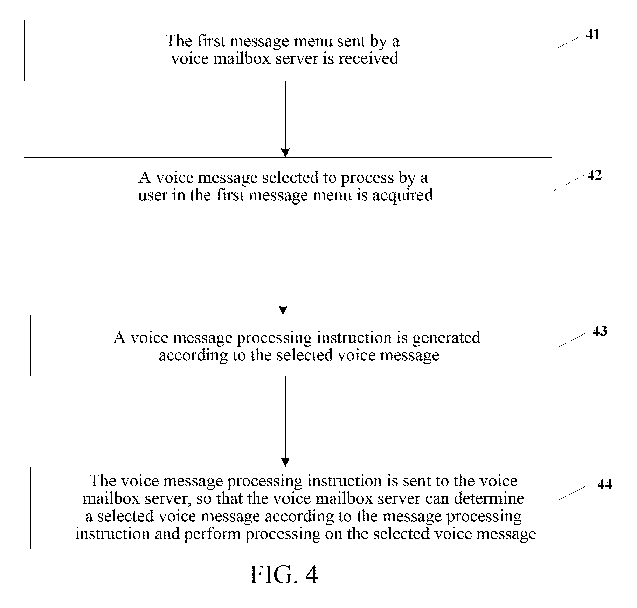

The embodiment of the present document also provides a voice message processing method applied to a terminal, and as shown in FIG. 4, the following steps are included.

In step 41, a first message menu sent by a voice mailbox server is received.

In step 42, a voice message selected to process by a user in the first message menu is acquired.

In step 43, a voice message processing instruction is generated according to the selected voice message.

In step 44, the voice message processing instruction is sent to the voice mailbox server, so that the voice mailbox server can determine a selected voice message according to the message processing instruction and perform processing on the selected voice message.

With the above method, after a first message menu sent by a voice mailbox server is received, information of a voice message selected to be processed immediately by the user of the terminal in the first message menu will be acquired, and a message processing instruction is generated according to the information of the voice message, the message processing instruction includes an identifier of the voice message selected by the user, and the message processing instruction is sent back to the voice mailbox server.

In the above process, the user is not required to remember a host flow access code of the voice mailbox, if it is needed to listen to a message, it is also not required to listen one by one according to a message time, but only required to select voice message information on which next operation processing is required to be performed in the received message menu, and the selected voice message can be directly listened to, so that the user uses a message function of the voice mailbox service more conveniently and efficiently.

Wherein, preferably, the step 42 can be specifically acquiring a voice message selected to process by the user in the first message menu through a pointer of a virtual management menu.

Wherein, preferably, the above method also includes the following steps.

In step 45, a message menu received by the terminal is stored.

In step 46, the stored message menu is updated to the first message menu last time received.

After the terminal receives the first message menu, the previously stored message menu is not needed any more, and it can be updated as the first message menu.

The embodiments of the present document will be described in detail in combination with practices, and the following steps are included.

In step 1, communication is established between a calling user A and a voice mailbox server.

In step 2, the voice mailbox server prompts the user A to record a message C, and after the recording is finished, the user A presses a # key to send the message C according to a prompt tone or hangs off to send the message C.

In step 3, when the message C is recorded, the voice mailbox server generates relevant message information according to the message C, wherein a called terminal identifier, a message identifier, a voice number, a message time and a recording duration and so on are included.

In step 4, the voice mailbox server determines all voice message information of a called terminal according to the called terminal identifier, wherein message information of the message C, message D and message E is included, and a message menu is formed.

In step 5, the voice mailbox server sends the message menu to a called terminal user B through a communication protocol between the server and the terminal.

In step 6, after the message menu is received, the called terminal user B will select certain message information D on which operation processing is wished to be performed.

In step 7, the terminal will generate a message operation instruction F related to the message information D.

In step 8, the terminal returns the message operation instruction F to the voice mailbox server, the voice mailbox server determines the message D according to a message identifier in the message operation instruction F, and performs operation processing on the D according to the message operation instruction F.

In the above process, the user is not required to remember a host flow access code of the voice mailbox, if it is needed to listen to a message, it is also not required to listen one by one according to a message time, but only required to select voice message information on which next operation processing is required to be performed in the received message menu, and the selected voice message can be directly listened to, so that the user uses a message function of the voice mailbox service more conveniently and efficiently, which improves the users' satisfaction and is very beneficial for service promotion.

The above description is the preferred embodiments of the present document, it should be pointed that, for those ordinary skilled in the art, a plurality of improvements and modifications also can be made in the premise of not departing from the principle of the present document, and all these improvements and modifications should fall into the protection scope of the present document.

### Industrial Applicability

The embodiments of the present document have the following beneficial effects.

The flow for the user to listen to the message and operate is greatly simplified through the above process, so that users of the voice mailbox perform operation processing on the specified message information conveniently and efficiently, which improves the users' satisfaction and is very beneficial for service promotion;
all the operations on the voice message are not required to locally download the voice message, and all the operations can be directly performed in the voice mailbox server through the message processing instruction, which saves terminal resources; and
a voice message menu can be sent to the terminal through a USSD protocol in the embodiments of the present documents, and the terminal can execute operations related to the voice message conveniently and efficiently with no need of installing a client software, which also saves the terminal resources.

## Claims

1. A voice mailbox server, comprising:
a voice message recording module, configured to: when recording a voice message of a calling terminal, generate first voice message information according to the voice message, wherein the first voice message information comprises: a called terminal identifier;
a first acquisition module, configured to: acquire all voice message information corresponding to the called terminal identifier, and form a first message menu;
a first sending module, configured to: send the first message menu to a called terminal corresponding to the called terminal identifier;
a first receiving module, configured to: receive a voice message processing instruction fed back by the called terminal, wherein the voice message processing instruction is generated by the called terminal according to and after a voice message is selected to process by a user from the first message menu; and
a processing module, configured to: according to the voice message processing instruction, perform processing on a selected voice message.

2. The voice mailbox server according to claim 1, wherein, the processing module comprises:
a second acquisition module, configured to: according to the voice message processing instruction, determine a first voice message identifier corresponding to the selected voice message;
a determination module, configured to: according to the first voice message identifier and a preset corresponding relationship between voice message identifiers and voice messages, determine a first voice message corresponding to the first voice message identifier; and
a processing submodule, configured to: according to the message processing instruction, perform processing on the first voice message.

3. The voice mailbox server according to claim 2, wherein, the processing submodule is configured to: according to the message processing instruction, perform processing of playing, forwarding, saving or deleting on the first voice message.

4. A terminal, comprising:
a second receiving module, configured to: receive a first message menu sent by a voice mailbox server;
a third acquisition module, configured to: acquire a voice message selected to process by a user in the first message menu;
an instruction generation module, configured to: generate a voice message processing instruction according to the selected voice message; and
a second sending module, configured to: send the voice message processing instruction to the voice mailbox server, so that the voice mailbox server can determine a selected voice message according to the message processing instruction and perform processing on the selected voice message.

5. The terminal according to claim 4, wherein, the third acquisition module is configured to acquire a voice message selected to process by the user in the first message menu through a pointer of a virtual management menu.

6. The terminal according to claim 4, further comprising:
a second storage module, configured to: store a message menu received by the terminal; and
an update module, configured to: update the message menu in the second storage module to the first message menu received by the second receiving module last time.

7. A voice message processing method, applied to a voice mailbox server, comprising:
when recording a voice message of a calling terminal, generating first voice message information according to the voice message, wherein the first voice message information comprises a called terminal identifier;
acquiring all voice message information corresponding to the called terminal identifier, and forming a first message menu;
sending the first message menu to a called terminal corresponding to the called terminal identifier;
receiving a voice message processing instruction fed back by the called terminal, wherein the voice message processing instruction is generated by the called terminal according to and after a voice message is selected to process from the first message menu by a user; and
performing processing on the selected voice message according to the voice message processing instruction.

8. The voice message processing method according to claim 7, wherein, performing processing on the selected voice message according to the voice message processing instruction specifically comprises:
determining a first voice message identifier corresponding to the selected voice message according to the voice message processing instruction;
determining a first voice message corresponding to the first voice message identifier according to the first voice message identifier and a preset corresponding relationship between voice message identifiers and voice messages; and
performing processing on the first voice message according to the message processing instruction.

9. The voice message processing method according to claim 8, wherein, performing processing on the first voice message according to the message processing instruction is specifically: performing processing of playing, forwarding, saving or deleting on the first voice message according to the message processing instruction.

10. A voice message processing method, applied to a terminal, comprising:
receiving a first message menu sent by a voice mailbox server;
acquiring a voice message selected to process by a user in the first message menu;
generating a voice message processing instruction according to the selected voice message; and
sending the voice message processing instruction to the voice mailbox server, so that the voice mailbox server can determine a selected voice message according to the message processing instruction and perform processing on the selected voice message.

11. The voice message processing method according to claim 10, wherein, acquiring a voice message selected to process by the user in the first message menu is specifically acquiring a voice message selected to process by the user in the first message menu through a pointer of a virtual management menu.

12. The voice message processing method according to claim 10, further comprising:
storing a message menu received by the terminal; and
updating the stored message menu to the first message menu received last time.
